# EUROPEAN PATENT APPLICATION

(11) **EP 1 248 309 A1**
(43) Date of publication of application: **09.10.2002**
(21) Application number: 02006656.9
(22) Date of filing: 26.03.2002
(51) Int. Cl.: H01M 4/58

(54) **Lithium iron thiophosphate compound, process for producing the compound, and lithium battery using the compound**

(30) Priority: 27.03.2001 JP 2001089447
(71) Applicant: National Institute for Materials Science, Tsukuba-shi, Ibaraki 305-0047 (JP); Toda Kogyo Corporation, Hiroshima-shi, Hiroshima-ken 730-0847 (JP)
(72) Inventor: Takada, Kazunori, Tsukuba-shi, Ibaraki 305-0047 (JP); Watanabe, Mamoru, Tsukuba-shi, Ibaraki 305-0047 (JP); Kondo, Shigeo, Tsukuba-shi, Ibaraki 305-0047 (JP); Kouguchi, Masaru c/o Japan Storage Battery Co.,Ltd, Kyoto 601-8520 (JP); Kajiyama, Akihisa, Toda Kogyo Corporation, Hiroshima-ken 739-0652 (JP); Inada, Taro, Denki Kagaku Kogyo Kabushiki Kaisha, Machida-shi, Tokyo 194-8560 (JP)
(74) Representative: VOSSIUS & PARTNER

(57) **Abstract**

Provided is a lithium iron thiophosphate compound represented by a general formula: Li₂ₓFe₁₋ₓPS₃ wherein x is more than 0 and less than 1. This compound provides a lithium battery having high out put as well as high energy density when used as an electrode active material.

## Description

The present invention relates to a lithium iron thiophosphate compound, more specifically, to a lithium iron thiophosphate compound which is particularly useful as an electrode active material of a lithium battery, a process for producing the compound, and a lithium battery using the compound.

In recent years, with the development of portable devices such as personal computers and portable telephones, demand of batteries has been becoming very large as power sources thereof. Lithium batteries are particularly actively researched, as being capable of giving a high energy density, in various fields since lithium is a material having a small atomic weight and a large ionization energy.

In the so-called lithium ion battery, LiCoO₂ is used as its cathode active material and a carbon material is used as its anode active material. Electrode reactions in these active materials are an insertion reaction of lithium ions between crystal layers and an elimination reaction from the layers. In the case that the insertion-elimination reaction of lithium ions is used as electrode reaction, a change in crystal structure caused by the electrode reaction becomes small so that very good battery characteristics such as a decrease in capacity-drop resulting from the repetition of charge and discharge are obtained.

Such insertion-elimination reaction of lithium ions into or from crystal layers was found out for the first time in TiS₂. Thereafter, similar reactions were observed e.g. in various sulfides, selenides and oxides. Furthermore, it has been found out that lithium ions are inserted into and eliminated from one-dimensional tunnel structure or three-dimensional network structure, and the application thereof to electrode active materials has been investigated.

In the insertion-elimination reaction, inserted or eliminated lithium ions may be called guests and e.g. an oxide having lamellar structure, tunnel structure and network structure which receives the lithium ions may be called an intercalation host.

Researches on the intercalation host were made mainly about sulfides including TiS₂. In recent years, the researches have been made mainly about oxides including LiCoO₂. Shift of the researches from sulfides to oxides is made because the oxides make it possible to develop batteries having a high energy density because of a nobler electrode voltage of the oxides. When an oxide type host is used, the insertion-elimination voltage of lithium ions is, for example, 3 V in the case of V₂O₅, 4 V in the case of LiCo₂O, and about 5 V in the case of LiNi_{1/2}Mn_{3/2}O₄. On the other hand, the insertion-elimination reaction of lithium ions in the case of almost all of sulfide type hosts takes place at 2.5 V or less on the basis of lithium. Therefore, the voltage of lithium batteries using a sulfide as a cathode active material becomes 2.5 V or less.

For an electrode active material, it is important not only that the energy density thereof is made as high as possible, but also that a larger output current is taken out. In order to make the output current property high, it is necessary to make the diffusion of lithium ions in an intercalation host speedy.

In sulfide type hosts, a sulfide ion coordinates to a lithium ion. In oxide type hosts, an oxide ion coordinates to a lithium ion. In the case that an oxide ion coordinates to a lithium ion, in general, electrostatically attractive force acts intensely between the two so that the oxide ion tends-to disturb the diffusion of the lithium ion. On the other hand, a sulfide ion has a higher polarizing ability than an oxide ion, and thus, the sulfide ion has a small effect of disturbing the diffusion of a lithium ion. That is, in order to make the energy density of a battery high, it is preferred to use an oxide type host, and in order to make the output of the battery high, it is preferred to use a sulfide type host.

However, the electromotive force of the sulfide type host is generally small. The electromotive force measured in TiS₂, which is most known, is about 2.3 V, and that of almost all sulfide type hosts is 2.5 V or less. Thus, the sulfide type hosts have a problem that it is difficult to make the energy density high.

An object of the present invention is to provide a lithium iron thiophosphate compound represented by a general formula Li₂ₓFe₁₋ₓPS₃ which is capable of enhancing the diffusion of lithium ion and exhibiting a high electromotive force.

Another object of the present invention is to provide a process for producing the above-mentioned lithium iron thiophosphate compound.

Still another object of the present invention is to provide a lithium battery using the above-mentioned lithium iron thiophosphate compound as an electrode active material.

That is, a first aspect of the present invention is to provide a lithium iron thiophosphate compound represented by a general formula: Li₂ₓFe₁₋ₓPS₃ wherein x is more than 0 and less than 1.

A preferred embodiment is the above-mentioned lithium iron thiophosphate compound wherein x in the general formula Li₂ₓFe₁₋ₓPS₃ is not less than 0.4 and not more than 0.6.

A preferred embodiment is the above-mentioned lithium iron thiophosphate compound wherein x in the general formula Li₂ₓFe₁₋ₓPS₃ is 0.5.

A second aspect of the present invention is to provide a process for producing the above-mentioned lithium iron thiophosphate compound, comprising the steps of:
introducing Li, Fe, P, S and/or a sulfide of Li, Fe, P to an airtight container filled with inert atmosphere, and
heating the resultant mixture at a temperature between 400 to 800 °C.

A third aspect of the present invention is to provide a lithium battery wherein the above-mentioned lithium iron thiophosphate compound is used as an electrode active material.

The invention is described in detail in connection with the drawings in which
FIG. 1 is an X-ray diffraction pattern of a lithium iron thiophosphate compound in Example 1 according to the present invention;
FIG. 2 is a graph showing a characteristic of an electrode active material of the lithium iron thiophosphate compound in Example 1 according to the present invention;
FIG. 3 is an X-ray diffraction pattern of a lithium iron thiophosphate compound in Example 2 according to the present invention; and
FIG. 4 is a graph showing a characteristic of an electrode active material of the lithium iron thiophosphate compound in Example 2 according to the present invention.

A host structure causing insertion-elimination reaction generally contains transition metal ions, the valence of which is changed by insertion-elimination of ions. It has been found out that in known sulfides, various transition metal ions cause a change in their valence. However, any element in the fourth period, which has a small atomic weight, is preferred as the transition metal in the host structure since it is possible to make capacity density high when used as an active material. From the industrial viewpoint, it is preferred to use an inexpensive element. As an element for satisfying these requirements, it is considered that an iron sulfide is preferred.

As the iron sulfide acting as an electrode active material in a lithium battery, e.g. FeS₂ and Li₂FeS₂ are reported. The voltage generated when lithium ions are inserted in FeS₂ is about 1.7 V, and the voltage generated when the lithium ions are eliminated from Li₂FeS₂ is as low as 2.3 V. As other iron sulfides, it is reported that FePS₃ has a lamellar structure and ions can be inserted in the layers. However, it is reported that this material exhibits an electrode voltage of about 3 V before the insertion of lithium ions therein but the voltage drops drastically by the insertion of the lithium ions so that the insertion voltage of the lithium ions becomes as low as 2 V or less (R. Brec, Solid State Ionics, vol. 22, p.3 (1986))

The valence of the iron ions in this compound FePS₃ is +2. In redox reaction in the insertion of lithium ions, the iron ions change into a lower oxidation number. As a result, a very low voltage would be exhibited. Accordingly, in order to make the voltage higher, it is necessary to make the oxidation number of the iron ions higher in the insertion-elimination reaction of the lithium ions. In the Li₂ₓFe₁₋ₓPS₃ of the present invention, the oxidation number of the iron ions is +2 and the oxidation number changes to +3 with the elimination of the lithium ions.

A different example of a sulfide generating a voltage by a redox pair of Fe²⁺/Fe³⁺ is Li₂FeS₂ described above. The iron ions in this sulfide are in a +2 valence state. By eliminating lithium ions electrochemically to become a composition of Li₂₋δ FeS₂ wherein δ is the elimination quantity of the lithium ions, the redox pair of Fe²⁺/Fe³⁺ exhibits a voltage of about 2.3 V.

In the Li₂ₓFe₁₋ₓPS₃ compound according to the present invention, its redox pair generating a voltage is a redox pair of Fe²⁺/Fe³⁺ in the same way as in Li₂FeS₂. However, the lithium iron thiophosphate compound generates about 3V, which is significantly higher than Li₂FeS₂. It is known that in the oxide type hosts, the redox voltage thereof changes dependently on the kind of cations adjacent to transition metal ions acting as a redox pair (A.K. Padhi, K.S. Nanjundaswamy, C. Masquelier, and J.B. Goodenough, J. Electrochemical Society, vol. 144, 2581 (1997)). It is considered that in Li₂ₓFe₁₋ₓPS₃ according to the present invention, a part (x) of Fe²⁺ in FePS₃ is substituted with Li⁺ and lithium ions, the number of which is x are present between its layers. Consequently, the redox pair of Fe²⁺/Fe³⁺ is affected by P⁴⁺ in a P₂S₆ octahedron which shares a side with an FeS₆ octahedron so that such a high voltage is exhibited.

Li₂ₓFe₁₋ₓPS₃ according to the present invention has a structure similar to FePS₃ or Li₂FeS₃. The structures of FePS₃ and Li₂PS₃ are already reported in Z. Anorg. Allig. Chem, 401, 97 (1973) and J. Solid State Chem., 43, 151 (1982). Li₂PS₃ belongs to a hexagonal system (space group:
P6₃/mcm), and has a lamellar structure wherein lithium ions are present between layers of PS₃. That is, the lamellar structure is represented by PS₃-Li-PS₃. On the other hand, FePS₃ belongs to a prismatic crystal system (space group: C2/m), which is slightly distorted from the hexagonal system, and has a structure wherein iron ions are present in alternate spaces between PS₃ layers similar to Li₂PS₃. Namely, FePS₃ has a lamellar structure of PS₃-Fe-PS₃-( )-PS₃, wherein ( ) represents a space having no cations between layers. It is considered that Li₂ₓFe₁₋ₓPS₃ according to the present invention has a lamellar structure PS₃-(Fe₁₋ₓLiₓ)-PS₃-Liₓ-PS₃ wherein a part of the iron ions in FePS₃ is substituted with lithium ions and further the lithium ions occupy sites containing no Fe ions between PS₃ layers.

Various thiophosphate compounds represented by a general formula MePS₃ wherein Me represents a metal, such as NiPS₃ and MnPS₃, have a lamellar structure equivalent to that of FePS₃. However, only Li₂NiP₂S₆ is reported as a compound having a composition between MePS₃-Li₂PS₃ and no iron type compound has been reported before the present invention.

The lithium iron thiophosphate according to the present invention is represented by a general formula Li₂ₓFe₁₋ₓPS₃. In this general formula, x is 0 < x < 1, preferably 0.4 ≦x≦ 0.6, and most preferably x =0.5. In the case of x =0 or 1, the intended lithium iron thiophosphate compound which is an objective product of the present invention cannot be obtained.

Li₂ₓFe₁₋ₓPS₃ according to the present invention can be obtained by introducing Li, Fe and P and/or sulfides thereof and S into an airtight container filled with inert atmosphere and heating the mixture at a temperature between 400 and 800 °C. Specifically, Li₂ₓFe₁₋ₓPS₃ can be obtained by mixing e.g. Li₂S, Fe, FeS, P₂S₅, P₂S₃, Li, S and P as starting materials to have a desired composition, putting the resultant mixture airtightly in inert atmosphere, for example, in the manner of putting the mixture airtightly into a quartz tube, and heating the mixture at a temperature of 400 to 800 °C. In the case that the mixture is heated in flow of inert gas, phosphorus evaporates and scatters as the molecule of P₂S₅ because P₂S₅ is in a molecular crystal state, and thus, a compound having a desired composition cannot be obtained. When the heating temperature is lower than 400 °C, the reaction rate is low so that the reaction for obtaining a desired compound requires long time. When the heating temperature is higher than 800 °C, a desired compound cannot be obtained since FePS₃ sublimates.

In Li₂ₓFe₁₋ₓPS₃ according to the present invention, lithium ions which can be electrochemically inserted and eliminated would be lithium ions present between layers of PS₃-(Fe₁₋ₓLiₓ)-PS₃. Furthermore, the insertion-elimination reaction thereof advances simultaneously with the redox reaction of Fe²⁺/Fe³⁺. Therefore, in the composition making the capacity of Li₂ₓFe₁₋ₓPS₃ largest, x is 1/2. As an electrode active material, this composition (LiFe_{1/2}PS₃) is most preferred.

Li₂ₓFe₁₋ₓPS₃ according to the present invention is particularly useful as an electrode active material of a lithium battery, and exhibits a high voltage of about 3 V on the basis of its lithium electrode.

The present invention will be described in greater detail by way of Examples, but the present invention is not limited thereto.

### Example 1

In the present example, a lithium iron thiophosphate compound represented by LiFe_{1/2}PS₃ was synthesized and the electrode characteristic thereof in a lithium battery was examined.

LiFe_{1/2}PS₃ was synthesized by the following method.

As starting materials, metal iron (Fe) powder, iron sulfide (II) (FeS), and diphosphorus pentasulfide (P₂S₅) were used. These starting materials were mixed with each other at a molar ratio of 1:1:1. Thereafter, the mixture was molded into a pellet form. The pellets were put airtightly into a quartz tube whose inner surface was coated with carbon, and the tube was heated at 700 °C for 8 hours.

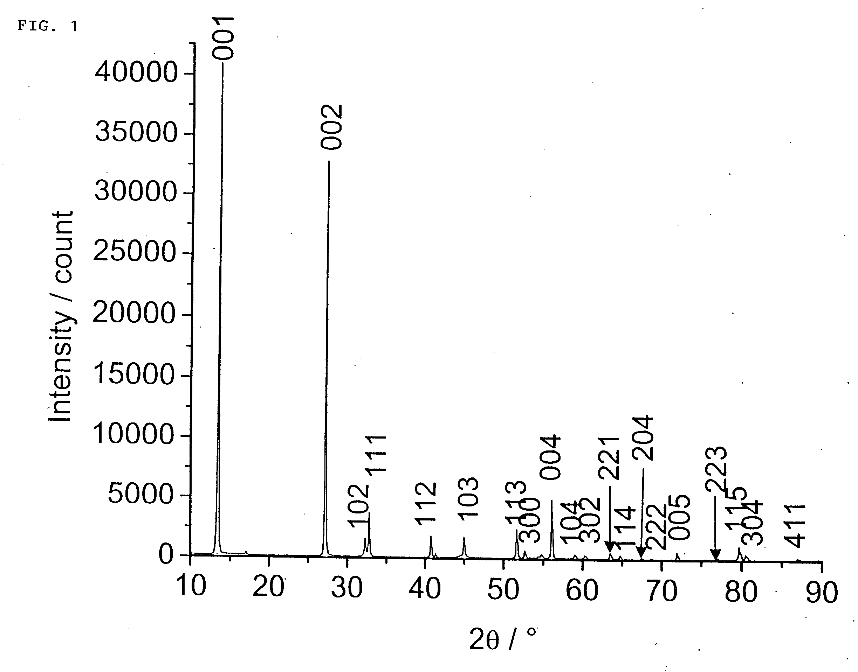

The X-ray diffraction pattern of the thus obtained powder of LiFe_{1/2}PS₃ is shown in FIG. 1. Index numbers as unit lattice of hexagonal crystal can be assigned to all diffraction peaks. Thus, LiFe_{1/2}PS₃ obtained in the present example can be considered to have a structure similar to that of Li₂PS₃ or FePS₃.

Next, oxysuflide glass represented by 0.01Li₃PO₄-0.63Li₂S-0.36SiS₂ was synthesized as a lithium ion electrically-conductive solid electrolyte by the following method.

Lithium sulfide, silicon sulfide and lithium phosphate were weighed at a molar ratio of 63:36:1 and then mixed with each other. This mixture was filled into a crucible made of glassy carbon. The mixture was melted at 1000 °C in flow of argon gas for 2 hours. The melted product was super-rapidly cooled with twin rollers. In this way, a lithium ion electrically-conductive solid electrolyte was obtained.

LiFe_{1/2}PS₃ and 0.01Li₃PO₄-0.63Li₂S-0.36SiS₂, which were synthesized by the above-mentioned methods, were used to examine the characteristic of LiFe_{1/2}PS₃ as an electrode active material by the following method.

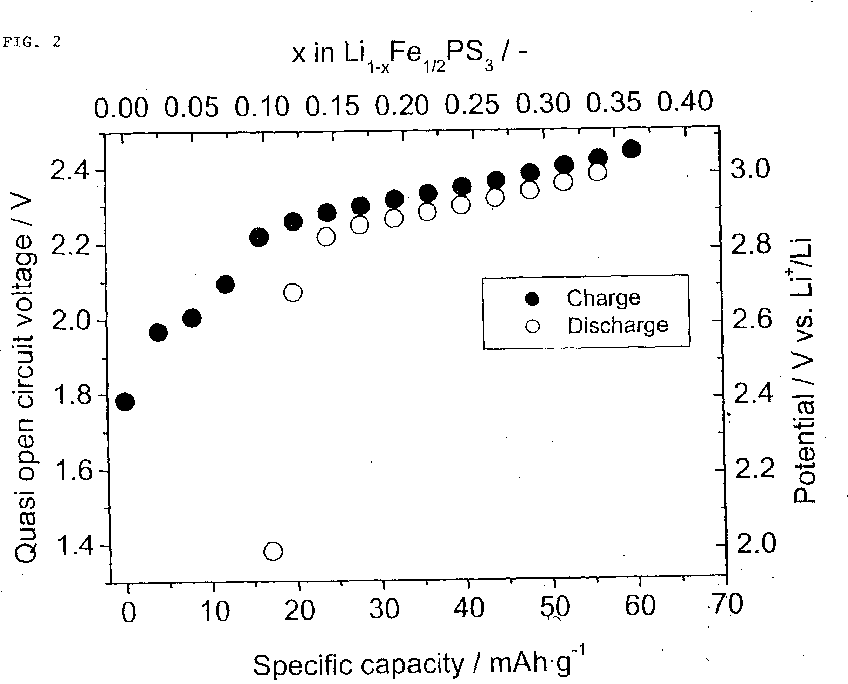

LiFe_{1/2}PS₃ and 0.01Li₃PO₄-0.63Li₂S-0.36SiS₂ obtained in the above-mentioned methods were mixed with each other at a weight ratio of 1:1 and then 10 mg of this mixture was used as a working electrode. As a counter electrode, an indium-lithium alloy was used. The working electrode and the counter electrode were put together to sandwich a solid electrolyte layer so that they were integrated into a three-layer form. In this way, an electrochemical cell was produced. Constant electric current pulses (electric current value: 10 µA) in an oxidization direction were repeatedly supplied to this electrochemical cell for 2 hours. After each of the supplies of the pulses, open circuit voltage (pause time: 2 hours) was recorded. Subsequently, constant electric current pulses were repeatedly supplied thereto in a reduction direction. In the same way, open circuit voltage was recorded. The thus obtained voltage curve of LiFe_{1/2}PS₃ is shown in FIG. 2.

In FIG. 2, its lower transverse axis represents the electricity quantity of the electric current supplied to LiFe_{1/2}PS₃ per weight, and its upper transverse axis represents the elimination quantity (δ: Li₁δFe_{1/2}PS₃) of lithium ions, calculated from the electricity quantity of the supplied electric current. Its left vertical axis represents the voltage between terminals of the measured cell, and its right vertical axis represents the value obtained by converting the voltage of LiFe_{1/2}PS₃ from terminal-terminal voltage to voltage on the basis of lithium electrode. Black spots represent a voltage change during elimination of the lithium ions. White spots represent a voltage change when the lithium ions are inserted again after the elimination of the lithium ions.

As is evident from FIG. 2, in LiFe_{1/2}PS₃ according to the present example, lithium ions can be eliminated at a voltage of about 3 V (on the basis of lithium electrode), and after the elimination of the lithium ions, they can be inserted again. It has also been found out that LiFe_{1/2}PS₃ according to the present example acts as an electrode active material exhibiting a relatively high voltage though this compound is a sulfide.

### Example 2

In the present example, a lithium iron thiophosphate compound represented by Li_{2/3}Fe_{2/3}PS₃ was synthesized and electrode characteristic thereof in a lithium battery was examined.

Li_{2/3}Fe_{2/3}PS₃ was synthesized by the following method.

Li_{2/3}Fe_{2/3}PS₃ was synthesized in the same way as in Example 1 except that a composition obtained by mixing Fe powder, FeS, P₂S₅ and lithium sulfide (Li₂S) at a molar ratio of 3:1:3:2 was used as a starting material.

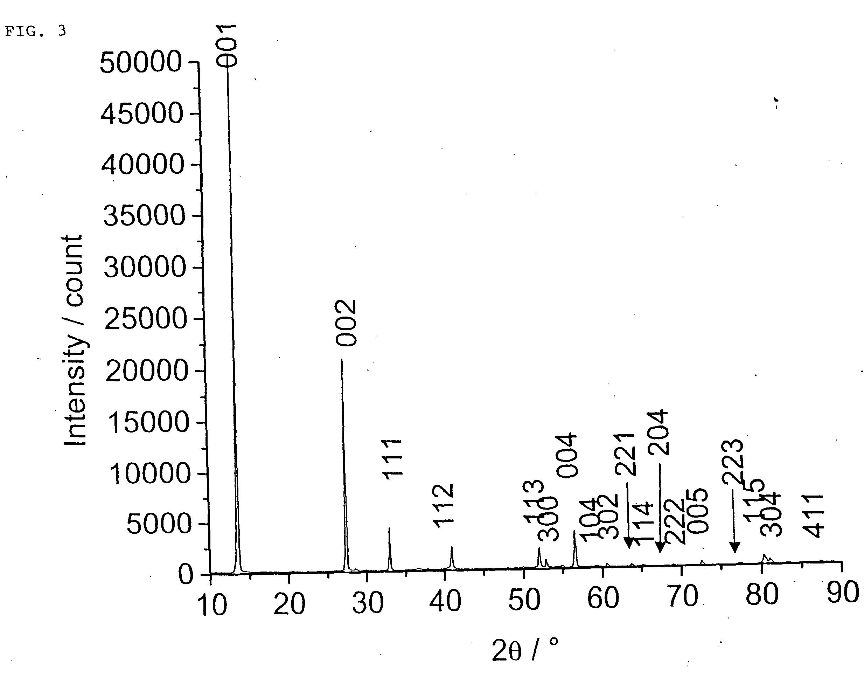

The X-ray diffraction pattern of the thus obtained powder of Li_{2/3}Fe_{2/3}PS₃ is shown in FIG. 3. Index numbers as unit lattice of hexagonal crystal can be assigned to all diffraction peaks. Thus, Li_{2/3}Fe_{2/3}PS₃ obtained in the present example can be considered to have a structure similar to that of LiFe_{1/2}PS₃ in Example 1.

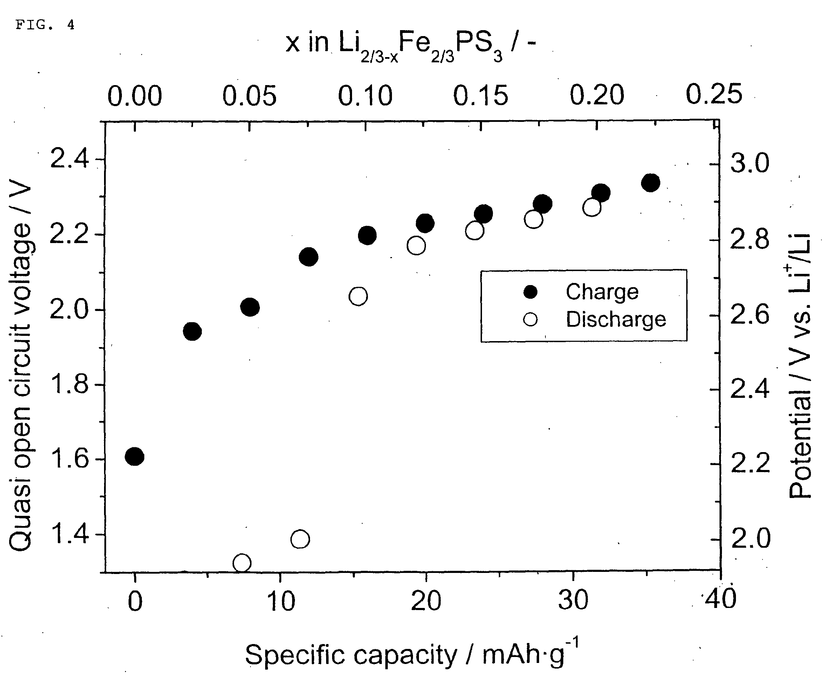

Next, the electrode characteristic of Li_{2/3}Fe_{2/3}PS₃ was examined by the same method as in Example 1. The results are shown in FIG. 4.

As is evident from FIG. 4, in Li_{2/3}Fe_{2/3}PS₃ according to the present example, lithium ions can be eliminated at a voltage of about 3 V (on the basis of lithium electrode voltage), and after the elimination of the lithium ions, they can be inserted again. It has also been found out that Li_{2/3}Fe_{2/3}PS₃ according to the present example acts as an electrode active material exhibiting a relatively high voltage though this compound is a sulfide.

In the present example, the first elimination quantity of lithium ions corresponds to 0.23 Li with respect to Li_{2/3}Fe_{2/3}PS₃. On the other hand, the first elimination quantity of lithium ions corresponds to 0.37 Li with respect to LiFe_{1/2}PS₃ in Example 1. In Li_{2/3}Fe_{2/3}PS₃, 1/3 of a lithium ion is present between Li_{1/3}Fe_{2/3}PS₃ layers and in LiFe_{1/2}PS₃, 1/2 of a lithium ion is present between Li_{1/2}Fe_{1/2}PS₃ layers. It can be therefore considered that the lithium ions which are inserted and eliminated at the time of charge and discharge are lithium ions present between LiₓFe₁₋ₓPS₃ layers.

At the time of charge, the quantity of lithium eliminated from Li₂ₓFe₁ ₋ₓPS₃ is xLi, and the quantity of Fe²⁺ whose valence changes with the elimination of the lithium ions is (1-x)Fe²⁺. Accordingly, in the composition having a maximum elimination quantity of the lithium ions, that is, a maximum capacity when Li₂ₓFe₁₋ₓPS₃ is used as an electrode active material, x is 1/2. This composition is most preferred.

As described above, the lithium iron thiophosphate according to the present invention, a voltage of about 3 V can be generated on the basis of lithium electrode. For example, when the lithium iron thiophosphate is used as an electrode active material of a lithium battery, it is possible to provide a lithium battery having high output as well as high energy density.

## Claims

1. A lithium iron thiophosphate compound represented by a general formula: Li₂ₓFe₁₋ₓPS₃ wherein x is more than 0 and less than 1.

2. The lithium iron thiophosphate compound according to claim 1, wherein x in the general formula Li₂ₓFe₁₋ₓPS₃ is not less than 0.4 and not more than 0.6.

3. The lithium iron thiophosphate compound according to claim 1, wherein x in the general formula Li₂ₓFe₁₋ₓPS₃ is 0.5.

4. A process for producing the lithium iron thiophosphate compound according to any one of claims 1 to 3, comprising the steps of:
introducing Li, Fe, P, S and/or sulfides of Li, Fe, P to an airtight container filled with inert atmosphere, and
heating at a temperature between 400 and 800 °C.

5. A lithium battery wherein the lithium iron thiophosphate compound according to any one of claims 1 to 3 is used as an electrode active material.
